# EUROPÄISCHE PATENTSCHRIFT

(11) **EP 2 133 223 B1**
(45) Veröffentlichungstag und Bekanntmachung des Hinweises auf die Patenterteilung: **08.12.2010**
(21) Anmeldenummer: 08290530.8
(22) Anmeldetag: 10.06.2008
(51) Int. Cl.: B60H 1/00

(54) **Klimaanlage für ein Kraftfahrzeug**
Air conditioning for a motor vehicle
Climatisation pour un véhicule automobile

(43) Veröffentlichungstag der Anmeldung: 16.12.2009
(73) Patentinhaber: Behr France Rouffach SAS, 68250 Rouffach (FR)
(72) Erfinder: Lenotte, Vincent, Dipl.-Ing., 68124 Logelbach (DE)
(74) Vertreter: Grauel, Andreas

(56) Entgegenhaltungen:
- DE-U1-202004 006 257
- FR-A- 2 771 343
- GB-A- 1 452 270

## Beschreibung

Die Erfindung betrifft eine Kraftfahrzeugklimaanlage gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Nach den jeweiligen Erfordernissen kann die Kraftfahrzeugklimaanlage dabei wirken, um die Luft in dem Kraftfahrzeuginnenraum zu erwärmen und/oder zu kühlen.

Moderne Klimaanlagen dienen dem Komfort der Fahrzeuginsassen und sollen die Sicherheit fördern. Da ein Fahrer bei höheren Temperaturen nicht mehr die nötige Konzentration aufweist und dementsprechend nicht so gut auf schwierige Situationen reagieren kann, ist die Temperaturverteilung im Kraftfahrzeuginnenraum ein wichtiger Aspekt. Zu berücksichtigen ist dabei nicht nur die Temperaturverteilung vom Kopfbereich bis zum Fußraum, sondern auch die Temperaturverteilung vom Front- zum Fondbereich des Kraftfahrzeuginnenraums. Die Temperaturverteilung bzw. die Temperaturregelung bezüglich des Frontbereichs und des Fondbereichs des Fahrzeuginnenraums kann dabei getrennt oder für beide Bereiche gemeinsam ausgeführt werden.

Problematisch bezüglich der Temperaturverteilung in einer Kraftfahrzeugklimaanlage ist der Platzbedarf der hierzu erforderlichen Klappen, die eine Verteilung der Luftzufuhr in verschiedene Luftkanäle, z. B. Luftkanäle, die in den Frontbereich oder in den Fondbereich des Kraftfahrzeuginnenraums führen, oder Luftkanäle, die in den jeweils rechten oder linken Bereich des Kraftfahrzeuginnenraums führen, Luftkanäle, die Luft zu einem Kopfbereich oder in den Fußraumbereich führen, ermöglichten. Beispielsweise sind bei Schmetterlingsklappen, welche durch eine Kinematik verbunden sind, viele Teile wie Hebel, mehrere Klappen und die Kinematik, erforderlich. Auch besteht bei den derzeit bekannten Klimaanlagenkonzepten die Gefahr, dass die Front- und Fondfußaustritte unterschiedliche Temperaturen aufweisen.

Im Stand der Technik werden hierzu unter anderem so genannte Schmetterlingsklappen oder Seitenklappen verwendet, die einen hohen Platzbedarf erfordern und daher die Baugröße der Klimaanlage ungünstig beeinflussen.

Beispielsweise zeigt EP 1 792 769 A1 eine Kraftfahrzeugklimaanlage, welche einen in einem Gehäuse angeordneten Verdampfer, einen Heizer und zwei Mischklappen aufweist, von denen mindestens eine dem Frontbereich und mindestens eine dem Fondbereich des Kraftfahrzeuginnenraums zugeordnet ist. Die erste der beiden Mischklappen für den Fondbereich ist dabei eine Trommelklappe und die zweite der beiden Mischklappen für den Fondbereich ist eine Schmetterlingsklappe.

DE 601 25 829 T2 zeigt eine Luftklappenlageranordnung, welche aus einer Luftklappe mit einem ersten Festlager und einem Loslager sowie einem Kupplungselement besteht, das über ein zweites Festlager verfügt und mit der Luftklappe über das Loslager verbunden ist, wobei das Loslager auf der Luftklappe positioniert ist.

EP 0 247 448 zeigt eine Belüftungsvorrichtung für den Innenraum eines Kraftfahrzeuges. Die Belüftungseinrichtung weist ein Gehäuse mit einem im Querschnitt rechteckigen Einlassstutzen und einer im Querschnitt rechteckigen Ausströmöffnung auf, wobei der Querschnitt des Einlassstutzens kleiner als der Querschnitt der Ausströmöffnung ist. Der Einlassstutzen ist zur Ausströmöffnung seitlich derart versetzt, dass drei Seiten der Querschnittsfläche des Einlassstutzens und der Ausströmöffnung miteinander fluchten. Um trotz der versetzten Anordnung einen gleichmäßigen Querschnitt der Ausströmöffnung zu erreichen, sind auf den Seitenflächen der im Einlassstutzen schwenkbar angeordneten Absperrklappe miteinander fluchtende Leitrippen vorgesehen, die derart schräg gestellt sind, die derart schräg gestellt sind, dass ein Teil des durch den Einlassstutzen einströmenden Luftstroms auf den Abschnitt der Ausströmöffnung geleitet wird, der mit dem Einlassstutzen nicht fluchtet.

Die FR 2 771 343, die als nächstliegender Stand der Technik angesehen wird, offenbart weiterhin eine gattungsgemäße Klimaanlage.

Die im Stand der Technik bekannten Klappen zum Öffnen und Schließen von Luftkanälen bzw. zum Leiten, Teilen oder Mischen eines Luftstroms sind konstruktiv aufwändig und somit in der Herstellung teuer.

Daher ist es die Aufgabe der vorliegenden Erfindung, eine Kraftfahrzeugklimaanlage zur Verfügung zu stellen, bei welcher die Luftzufuhr, insbesondere die Luftverteilung zwischen dem Front- und dem Fondbereich sowie zwischen dem rechten und linken Bereich des Kraftfahrzeuginnenraumes auf einfache Weise und kostengünstig mittels einer Luftverteilungseinrichtung ermöglicht wird.

Diese Aufgabe der vorliegenden Erfindung wird durch eine Kraftfahrzeugklimaanlage mit den Merkmalen gemäß Anspruch 1 gelöst. Vorteilhafte Weiterbildungen der vorliegenden Erfindung sind in den Unteransprüchen definiert.

Erfindungsgemäß wird eine Kraftfahrzeugklimaanlage bereitgestellt, weiche ein Gehäuse, zumindest einen Luftkanal und eine in dem zumindest einen Luftkanal angeordnete Luftverteilereinheit umfasst, wobei die Luftverteilereinheit zumindest eine Welle und zumindest ein auf der Welle angeordnetes Scheibenelement umfasst. Das zumindest eine Scheibenelement ist in einem Winkel, welcher ungleich 90° ist, zu der Längsachse der Welle auf der Welle angeordnet, so dass mittels einer Rotationsbewegung der Welle bzw. des zumindest einen Scheibenelements der Strömungsquerschnitt des zumindest einen Luftkanals veränderbar ist. Mittels der erfindungsgemäßen Konfiguration kann durch einfache Drehung der Welle ein Luftkanal geschlossen oder geöffnet werden.

Gemäß einer bevorzugten Ausführungsform ist der zumindest eine Luftkanal durch das zumindest eine Scheibenelement zumindest 50 %, insbesondere vollständig verschließbar.

Vorzugsweise weist die Kraftfahrzeugklimaanlage weiterhin zumindest ein Luftkanalsystem auf, welches einen Hauptluftzufuhrkanal, einen mit dem Hauptluftzufuhrkanal in Verbindung stehenden ersten Luftkanal zur Zuleitung von Luft jeweils in einen linken Front- und Fondbereich des Kraftfahrzeuginnenraums und einen mit dem Hauptluftzufuhrkanal in Verbindung stehenden zweiten Luftkanal zur Zuleitung von Luft jeweils in einen rechten Front- und Fondbereich des Kraftfahrzeuginnenraums umfasst.

Gemäß einer weiteren bevorzugten Ausführungsform ist ein Paar von Scheibenelementen bestehend aus einem ersten Scheibenelement und einem zweiten Scheibenelement vorgesehen, welches als Luftverteilerklappe wirkt. Somit wird nur eine einzige Luftverteilerklappe für die Verteilung der Luft, welche aus einem Hauptkanal zugeführt wird, zu dem Frontbereich und dem Fondbereich des Fahrzeuginnenraums sowie zu den jeweiligen rechten und linken Bereichen des Fahrzeuginnenraums benötigt, was den Platzbedarf gegenüber den aus dem Stand der Technik bekannten Implementierungen deutlich reduziert. Auch ist die Konfiguration der Luftverteilereinheit bestehend aus einer Welle und einem Paar von Scheibenelementen konstruktiv einfach und daher kostengünstig herstellbar.

Gemäß einer weiteren bevorzugten Ausführungsform sind das erste Scheibenelement und das zweite Scheibenelement auf der Welle voneinander beabstandet angeordnet, wobei das erste Scheibenelement an einer ersten Öffnung des Hauptluftzufuhrkanals zu dem ersten Luftkanal vorgesehen ist, und wobei das zweite Scheibenelement an einer zweiten Öffnung des Hauptluftzufuhrkanals zu dem zweiten Luftkanal vorgesehen ist.

Besonders bevorzugt ist es, wenn das erste Scheibenelement und das zweite Scheibenelement auf der Welle spiegelsymmetrisch zueinander bezüglich einer Spiegelebene, die senkrecht auf der Längsachse der Welle steht, angeordnet sind.

Weiterhin ist es vorteilhaft, wenn das erste Scheibenelement und das zweite Scheibenelement jeweils schräg bezüglich der Längsachse der Welle auf der Welle angeordnet sind, wobei ein Winkel, den die jeweiligen Scheibenelemente mit der Längsachse der Welle einschließen, in einem Bereich von 25° bis 65° liegt. Die Luftverteilung zwischen dem rechten Front- und Fondbereich und linken Front- und Fondbereich des Fahrzeuginnenraums kann somit auf besonders einfache Weise durch den Neigungswinkel der beiden Scheibenelemente eingestellt werden. Dabei entspricht ein Neigungswinkel der spiegelsymmetrischen Scheibenelemente von 45° bezüglich der Längsachse der Welle einem Luftverteilungsverhältnis Fond/Front rechts/links von 50:50. Wird ein anderes Luftverteilungsverhältnis gewünscht, so kann dies mittels des Neigungswinkels auf einfache Art und Weise eingestellt werden. Vorzugsweise beträgt der Winkel, den das erste Scheibenelement und das zweite Scheibenelemente mit der Längsachse der Welle jeweils einschließen 45°, so dass das oben erläuterte Luftverteilungsverhältnis Fond/Front rechts/links von 50:50 entsteht, wodurch eine besonders gleichmäßige Temperaturverteilung im Fahrzeuginnenraum erreicht wird.

Gemäß noch einer weiteren bevorzugten Ausführungsform ist die Welle drehbar gelagert und mit einem elektromotorischen Antrieb, insbesondere mit einem Stellantrieb, verbunden.

Darüber hinaus ist gemäß noch einer vorteilhaften Weiterbildung der Stellantrieb steuerbar, um die Welle von einer ersten Position, in welcher das auf der Welle angeordnete erste Scheibenelement eine erste Öffnung des Hauptluftzufuhrkanals zu dem ersten Luftkanal, und das zweite Scheibenelement eine zweite Öffnung des Hauptluftzufuhrkanals zu dem zweiten Luftkanal verschließt, zu einer zweiten Position, in welcher das auf der Welle angeordnete erste Scheibenelement die erste Öffnung und das zweite Scheibenelement die zweite Öffnung jeweils freigeben, zu drehen. Dies stellt einen besonders einfachen und somit kostengünstig herstellbaren Mechanismus bereit, der durch wenige Komponenten bzw. Bauteile aufgebaut ist. Das erste und zweite Scheibenelement wirken dabei nicht nur, um die Hauptluftzufuhr zu den ersten und zweiten Luftzufuhrkanälen zu öffnen und zu schließen, sondern Teilen den Luftstrom in den jeweiligen Luftzufuhrkanälen darüber hinaus in einen nach rechts geleiteten und einen nach links geleiteten Luftstrom auf.

Vorzugsweise beträgt dabei der Drehwinkel der Welle zwischen der ersten Position und der zweiten Position 180°. Jedoch ist auch jede Position zwischen 0° und 180° einstellbar, um eine Luftzufuhr bzw. die Luftverteilung in den jeweiligen ersten und zweiten Luftzufuhrkanälen nach vorne und hinten entsprechend zu steuern.

Weiterhin weist gemäß einer bevorzugten Ausführungsform das zumindest eine Scheibenelement eine zentrale Öffnung auf, durch welche die Welle hindurchgeführt ist.

Auch ist das zumindest eine Scheibenelement gemäß einer weiteren bevorzugten Ausführungsform auf der Welle fixiert bzw. positionsfest damit verbunden. Die Fixierung des Scheibenelements kann auf jegliche bekannte Art und Weise erfolgen. Gemäß einer anderen bevorzugten Ausführungsform sind die Welle und das zumindest eine Scheibenelement einstückig mittels eines Spritzgußverfahrens aus Kunststoff hergestellt. Dies ist besonders kostengünstig bezüglich der Herstellungs- und Materialkosten. Darüber hinaus können auch das Gehäuse und die Luftzufuhrkanäle jeweils aus Kunststoff mittels eines Spritzgußverfahrens hergestellt sein.

Gemäß noch einer weiteren bevorzugten Ausführungsform weist der erste Luftkanal einen ersten Abschnitt, der zu einem linken Frontfußaustritt zum Ausgeben der Luft in den vorderen linken Fußraumbereich des Fahrzeuginnenraums des Kraftfahrzeugs führt, und einen zweiten Abschnitt auf, der zu einem linken Fondfußaustritt zum Ausgeben der Luft in den hinteren linken Fußraumbereich der Fahrgastzelle des Kraftfahrzeugs führt.

Weiterhin bevorzugt ist, dass der zweite Luftkanal einen ersten Abschnitt, der zu einem rechten Frontfußaustritt zum Ausgeben der Luft in den vorderen rechten Fußraumbereich des Fahrzeuginnenraums des Kraftfahrzeugs führt, und einen zweiten Abschnitt aufweist, der zu einem rechten Fondfußaustritt zum Ausgeben der Luft in den hinteren rechten Fußraumbereich der Fahrgastzelle des Kraftfahrzeugs führt. Durch diese einfache Konfiguration wird eine minimale Anzahl von Bauteilen bzw. Komponenten benötigt, um eine gleichmäßige Belüftung des gesamten Fahrzeuginnenraums zu erzielen.

Schließlich umfasst die Kraftfahrzeugklimaanlage vorzugsweise einen in dem Gehäuse angeordneten Verdampfer und/oder zumindest eine Heizeinrichtung und/oder einen Zuheizer und/oder ein Gebläse.

Im Folgenden wird die Erfindung anhand eines Ausführungsbeispiels unter Bezugnahme auf die Zeichnung detailliert erläutert. In der Zeichnung zeigen:
- Fig.1: einen schematisch dargestellten Schnitt durch eine Kraftfahrzeug- klimaanlage gemäß dem Stand der Technik;
- Fig. 2A: eine perspektivische Ansicht einer Luftverteilereinheit;
- Fig. 2B: eine Seitenansicht der Luflverteilereinheit von Fig. 2A;
- Fig. 3: eine Schnittansicht einer in einem Luftkanalsystem einer Kraftfahr- zeugklimaanlage angeordneten Luftverteilereinheit;
- Fig. 4: eine Schnittansicht einer in einem Luftkanalsystem einer Kraftfahr- zeugklimaanlage angeordneten Luftverteilereinheit.

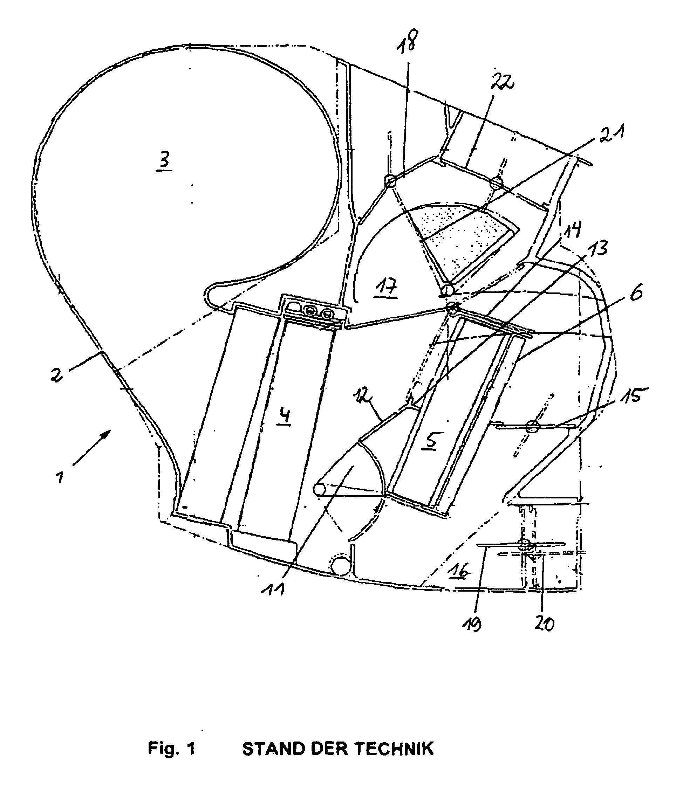

In Fig. 1 ist eine schematisch dargestellte seitliche Schnittansicht durch eine Kraftfahrzeugklimaanlage 1, wie sie im Stand der Technik bekannt ist. Die Kraftfahrzeugklimaanlage 1 weist ein Gehäuse 2 auf, in welchem ein Gebläse 3, ein Verdampfer 4, eine Heizeinrichtung 5 und ein elektrischer Zuheizer 6 angeordnet sind. Die Heizeinrichtung 5 wird durch Kühlflüssigkeit eines Motors des Kraftfahrzeugs erwärmt. Die Kraftfahrzeugklimaanlage 1 ist im Wesentlichen spiegelsymmetrisch zur Bildebene der Fig. 1 ausgebildet, wobei zur Teilung des Hauptluftstroms in mehrere Teilluftströme parallel zur Bildebene verlaufende Trennwände in dem Gehäuse 2 zwischen der Fahrer- und Beifahrerseite im Front- und Fondbereich vorgesehen sind. Im Folgenden wird daher nur eine Seite im Detail beschrieben werden.

Im Bereich zwischen dem Verdampfer 4 und dem Heizer 5 ist eine Mischklappe 11 für den Fondbereich angeordnet, welche als Trommelklappe ausgebildet ist. Der Schwenkwinkel der Fond-Mischklappe 11 beträgt ungefähr 55°. In Fig. 1 sind die beiden Endstellungen der Fond-Mischklappe 11 dargestellt, wobei die Kaltstellung mit durchgezogener Linie und die Warmstellung mit einer Strich-Punkt-Linie dargestellt sind. Um eine günstige Luftaufteilung zwischen dem Fond- und dem Frontbereich des Kraftfahrzeuginnenraums zu erzielen, ist eine Führungswand 12 vor der Heizeinrichtung 5 ausgebildet, welche auf einer Seite an der Fond-Mischklappe 11 in deren Kaltstellung anliegt und auf der anderen Seite zum einen in eine Trennwand 13 übergeht, welche den Luftstrom zwischen dem Front- und Fondbereich in der Heizeinrichtung 5 trennt, und zum anderen eine Anlagefläche für eine Mischklappe 14 für den Frontbereich bildet, an welcher die Front-Mischklappe 14 mit dem entsprechenden Klappenende in der Kaltstellung anliegt. Fig. 1 zeigt beide Endstellungen der Front-Mischklappe 14, wobei die Kaltstellung durch eine Strich-Punkt-Linie dargestellt ist. Die Front-Mischklappe 14 ist als so genannte Schmetterlingsklappe ausgebildet, wobei die beiden Klappenflügel in einem Winkel von 150° zueinander ausgebildet sind. Die Schwenkachse der Front-Mischklappe 14 ist an der oberen Ecke der Heizeinrichtung 5 angeordnet. Der Schwenkwinkel der Front-Mischklappe 14 beträgt ebenfalls 55°.

Hinter der Heizeinrichtung 5 und dem Zuheizer 6 ist die Trennwand 13 in Form einer Klappe 15 fortgeführt, welche ausschließlich im Defrostbetrieb geöffnet ist. Die geschlossene Stellung der Klappe 15 ist durch die durchgezogenen Linie und die geöffnete Stellung der Klappe 15 ist durch die Strich-Punkt-Linie dargestellt.

Für den Fondbereich sind jeweils eine Fußraumklappe 19 und eine Belüftungsklappe 20 in einem Fond-Mischraum 16 angeordnet. Auch bei diesen Klappen handelt es sich um herkömmliche Klappen mit einer mittig angeordneten Schwenkachse, um die auftretenden Kräfte gering zu hatten.

An einen Frontmischraum 17 angrenzend sind eine Defrostklappe 18, eine Belüftungsklappe 22 und eine Fußraumklappe 21 angeordnet, wobei die Defrostklappe 18 als Schmetterlingsklappe und die Belüftungsklappe 22 als herkömmliche Klappe ausgebildet sind, wobei die Fußraumklappe 21 außenseitig angeordnet und als Kreissegment ausgebildet ist, das parallel zur Gehäusewand verschwenkbar ist.

Gemäß der Erfindung können die beiden Fußraumklappen, welche im oben beschriebenen Stand der Technik eingesetzt werden, nämlich die in Fig. 1 gezeigte Fußraumklappe 20 sowie die Fußraumklappe 21, durch eine einzige Klappe, wie sie im Folgenden beschrieben wird, ersetzt werden.

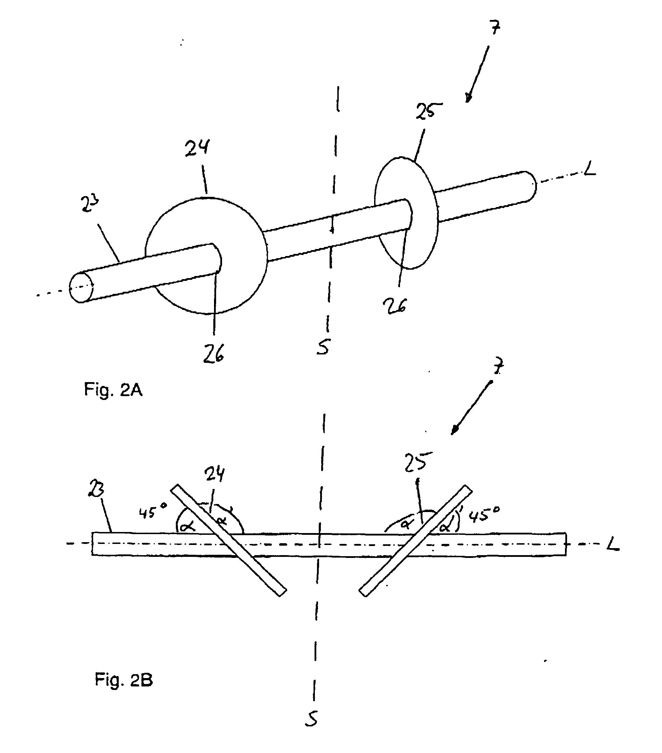

Fig. 2A zeigt eine perspektivische Ansicht einer Luftverteilereinheit 7 und Fig. 2B zeigt weiterhin eine Seitenansicht der erfindungsgemäßen Luftverteiler einheit 7 gemäß Fig. 2A. Die in Fig. 2A dargestellte Luftverteilereinheit 7 besteht im Wesentlichen aus einer drehbar gelagerten Welle 23 mit einer Längsachse L, welche mit einem Stellantrieb (nicht dargestellt) verbunden ist, der die Welle 23 von einer ersten Position zu einer zweiten Position um ihre Längsachse L herum dreht. Der Drehwinkel zwischen der ersten Position und der zweiten Position beträgt 180°. Auf der Welle 23 ist ein erstes Scheibenelement 24 angeordnet bzw. an der Welle 23 fixiert. Das erste Scheibenelement 24 ist kreisförmig bzw. kreisrund ausgebildet und weist eine zentrale Öffnung 26 auf, welche in der Form und im Durchmesser in etwa der Form und dem Durchmesser der Welle 23 entspricht, wobei die Welle 23 durch die zentrale Öffnung 26 des ersten Scheibenelements 24 hindurchgeführt ist. Weiterhin weist die Luftverteilereinheit 7 ein zweites Scheibenelement 25 auf, welches ebenfalls mit einer zentralen Öffnung 26 versehen ist und in der Größe und Form exakt dem ersten Scheibenelement 24 entspricht. Das zweite Scheibenelement 25 ist auf der Welle 23 beabstandet zu dem ersten Scheibenelement 24 und bezüglich zu einer Spiegelebene S, welche senkrecht auf der Längsachse L der Welle 23 steht, spiegelsymmetrisch zu dem ersten Scheibenelement 24 angeordnet. Wie in Fig. 2B erkannt werden kann, schließt das erste Scheibenelement 24 mit der Längsachse L der Welle 23 in diesem Ausführungsbeispiel einen Winkel α von 45° ein, wobei der Supplementwinkel α' 135° beträgt. Das zweite Scheibenelement 25 schließt ebenfalls einen Winkel von 45° mit der Längsachse L der Welle 23 ein, wobei es sich durch die Spiegelsymmetrie jedoch um den entsprechenden Winkel α' handelt. Der Neigungswinkel der Scheibenelemente 24, 25 kann jeglichen spitzen Winkel annehmen, je nach Luftverteilungserfordemis. Wesentlich ist dabei, dass die Scheibenelemente 24, 25 schräg zu der Welle 23 und spiegelsymmetrisch zueinander angeordnet sind.

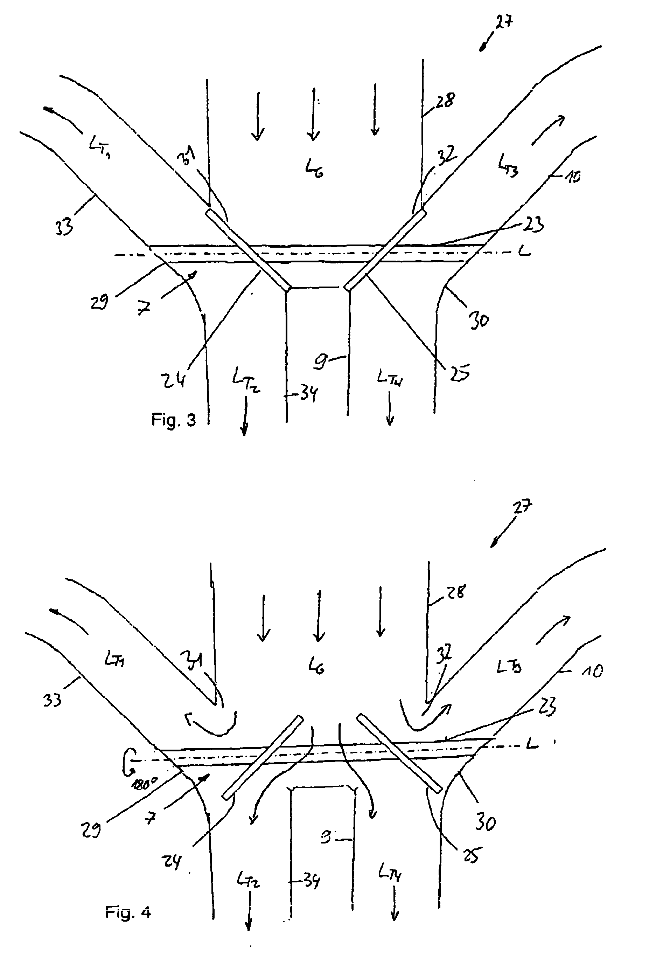

Fig. 3 zeigt eine Schnittansicht der in einem Luftkanalsystem 27 einer Kraftfahrzeugklimaanlage 1 angeordneten Luftverteilereinheit 7 von oben. Ein Hauptluftzufuhrkanal 28 führt einen Gesamtluftstrom L_{G} durch eine erste Öffnung 31 zu einem ersten Luftkanal 29 zur Zuleitung von Luft in den jeweiligen linken Frontfuß- und Fondfußbereich des Kraftfahrzeuginnenraums und einen mit dem Hauptluftzufuhrkanal 28 über eine zweite Öffnung 32 in Verbindung stehenden zweiten Luftkanal 30 zur Zuleitung von Luft in den rechten Fondfuß- und Frontfußbereich des Kraftfahrzeuginnenraums. Der Gesamtluftstrom L_{G} wird somit in vier Teilströme L_{T1}, L_{T2}, L_{T3} und L_{T4} unterteilt. In der in Fig. 3 gezeigten Anordnung befindet sich die Luftverteilereinheit 7 in einer ersten Position, wobei das erste Scheibenelement 24 und das zweite Scheibenelement 25 jeweilig die erste und zweite Öffnung 31, 32 verschließen.

Fig. 4 zeigt eine Schnittansicht des Luftkanalsystems 27 von Fig. 3 von oben, wobei die Welle 23 jedoch um 180° um die Längsachse L bzw. die Drehachse zu einer zweiten Position gedreht worden ist, in welcher das erste Scheibenelement 24 und das zweite Scheibenelement 25 jeweilig die erste und zweite Öffnung 31, 32 freigeben, so dass vier Teilluftströme L_{T1}, L_{T2}, L_{T3} und L_{T4} gebildet werden. Der erste Teilluftstrom L_{T1} fließt dabei durch einen ersten Abschnitt 33 des ersten Luftkanals 29, der zu einem linken Frontfußaustritt zum Einleiten der Luft in den vorderen linken Fußraumbereich des Fahrzeuginnenraums des Kraftfahrzeugs führt, und der zweite Teilluftstrom L_{T2} fließt durch einen zweiten Abschnitt 34 des ersten Luftkanals 29, der zu einem linken Fondfußaustritt zum Einleiten der Luft in den hinteren linken Fußraumbereich des Fahrzeuginnenraums des Kraftfahrzeugs führt. Weiterhin fließt der dritte Teilluftstrom L_{T3} durch einen ersten Abschnitt 10 des zweiten Luftkanals 30, der zu einem rechten Frontfußaustritt zum Einleiten der Luft in den vorderen rechten Fußraumbereich des Fahrzeuginnenraums des Kraftfahrzeugs führt, und der vierte Teilluftstrom L_{T4} wird durch einen zweiten Abschnitt 9 des zweiten Luftkanals 30 geleitet, der zu einem rechten Fondfußaustritt zum Einleiten der Luft in den hinteren rechten Fußraumbereich des Fahrzeuginnenraums des Kraftfahrzeugs führt. Somit wird mittels der konstruktiv einfachen Konfiguration der Luftverteilereinheit ein Hauptluftstrom effektiv in vier Teilluftströme unterteilt, die unterschiedliche Bereiche des Fahrzeuginnenraums gleichmäßig belüften bzw. temperieren.

Insgesamt betrachtet kann mit der erfindungsgemäßen Kraftfahrzeugklimaanlage 1 die Luftverteilung konstruktiv einfach ohne aufwändige Schmetterlingsklappen ausgeführt werden. In vorteilhafter Weise ist die Kraftfahrzeugklimaanlage damit in der Herstellung kostengünstig und arbeitet zuverlässig im Betrieb.

### Bezugszeichenliste

- 1: Kraftfahrzeugklimaanlage
- 2: Gehäuse
- 3: Gebläse
- 4: Verdampfer
- 5: Heizeinrichtung
- 6: Zuheizer
- 7: Luftverteilereinheit
- 8: Welle
- 9: zweiter Abschnitt des zweiten Luftkanals
- 10: erster Abschnitt des zweiten Luftkanals
- 11: Fond-Mischklappe
- 12: Führungswand
- 13: Trennwand
- 14: Front-Mischklappe
- 15: Klappe
- 16: Fondmischraum
- 17: Frontmischraum
- 18: Defrostklappe
- 19: Belüftungsklappe
- 20: Fußraumklappe
- 21: Fußraumklappe
- 22: Belüftungsklappe
- 23: Welle
- 24: erstes Scheibenelement
- 25: zweites Scheibenelement
- 26: zentrale Öffnung
- 27: Luftkanalsystem
- 28: Hauptluftzufuhrkanal
- 29: erster Luftkanal
- 30: zweiter Luftkanal
- 31: erste Öffnung
- 32: zweite Öffnung
- 33: erster Abschnitt des ersten Luftkanals
- 34: zweiter Abschnitt des ersten Luftkanals

## Patentansprüche

1. Kraftfahrzeugklimaanlage (1), umfassend
- ein Gehäuse (2),
- zumindest einen Luftkanal (29, 30) und
- eine in dem zumindest einen Luftkanal (29, 30) angeordnete Luftverteilereinheit (7), wobei die Luftverteilereinheit (7) zumindest eine Welle (23) und zumindest ein auf der Welle angeordnetes Scheibenelement (24, 25) umfasst,
**dadurch gekennzeichnet, dass**
das zumindest eine Scheibenelement (24, 25) in einem Winkel, welcher ungleich 90° ist, zu der Längsachse (L) der Welle auf der Welle (23) angeordnet ist, so dass mittels einer Rotationsbewegung der Welle (23) bzw. des zumindest einen Scheibenelements (24, 25) der Strömungsquerschnitt des zumindest einen Luftkanals (29) veränderbar ist.

2. Kraftfahrzeugklimaanlage (1) nach Anspruch 1,
**dadurch gekennzeichnet, dass**
der zumindest eine Luftkanal (29, 30) durch das zumindest eine Scheibenelement (24, 25), zumindest 50 %, insbesondere vollständig verschließbar ist.

3. Kraftfahrzeugklimaanlage (1) nach Anspruch 1 oder 2,
**dadurch gekennzeichnet, dass**
die Kraftfahrzeugklimaanlage (1) weiterhin zumindest ein Luftkanalsystem (27) aufweist, welches einen Hauptluftzufuhrkanal (28), einen mit dem Hauptluftzufuhrkanal (28) in Verbindung stehenden ersten Luftkanal (29) zur Zuleitung von Luft jeweils in einen linken Front- und Fondbereich des Kraftfahrzeuginnenraums und einen mit dem Hauptluftzufuhrkanal (28) in Verbindung stehenden zweiten Luftkanal (30) zur Zuleitung von Luft jeweils in einen rechten Front- und Fondbereich des Kraftfahrzeuginnenraums aufweist

4. Kraftfahrzeugklimaanlage (1) nach einem oder mehreren der Ansprüche 1 bis 3,
**dadurch gekennzeichnet, dass**
die Luftverteilereinheit (7) ein Paar von Scheibenelementen bestehend aus einem ersten Scheibenelement (24) und einem zweiten Scheibenelement (25) aufweist, wobei das Paar von Scheibenelementen als Luftverteilerklappe für die Verteilung eines aus dem Hauptluftzufuhrkanal (28) zugeführten Hauptluftstroms (L_{G}) in den ersten und zweiten Luftkanal (29, 30) wirkt.

5. Kraftfahrzeugklimaanlage (1) nach Anspruch 4,
**dadurch gekennzeichnet, dass**
das erste Scheibenelement (24) und das zweite Scheibenelement (25) auf der Welle (23) voneinander beabstandet angeordnet sind, wobei das erste Scheibenelement (24) an einer ersten Öffnung (31) des Hauptluftzufuhrkanals (28) zu dem ersten Luftkanal (29) vorgesehen ist, und wobei das zweite Scheibenelement (25) an einer zweiten Öffnung (32) des Hauptluftzufuhrkanals (28) zu dem zweiten Luftkanal (30) vorgesehen ist.

6. Kraftfahrzeugklimaanlage (1) nach Anspruch 4 oder 5,
**dadurch gekennzeichnet, dass**
das erste Scheibenelement (24) und das zweite Scheibenelement (25) auf der Welle (23) spiegelsymmetrisch zueinander bezüglich einer Spiegelebene (S), die senkrecht auf der Längsachse (L) der Welle (23) steht, angeordnet sind.

7. Kraftfahrzeugklimaanlage (1) nach einem oder mehreren der Ansprüche 1 bis 6,
**dadurch gekennzeichnet, dass**
das zumindest eine Scheibenelement (24, 25) mit der Längsachse (L) der Welle einen Winkel einschließt, welcher in einem Bereich von 25° bis 65° liegt, insbesondere bei 45°.

8. Kraftfahrzeugklimaanlage (1) nach einem oder mehreren der Ansprüche 1 bis 7,
**dadurch gekennzeichnet, dass**
die Welle (23) drehbar gelagert ist, und mit einem elektromotorischen Antrieb, insbesondere mit einem Stellantrieb, verbunden ist.

9. Kraftfahrzeugklimaanlage (1) nach einem oder mehreren der Ansprüche 4 bis 8,
**dadurch gekennzeichnet, dass**
der Stellantrieb steuerbar ist, um die Welle (23) von einer ersten Position, in welcher das auf der Welle (23) angeordnete erste Scheibenelement (24) die erste Öffnung (31) und das zweite Scheibenelement (25) die zweite Öffnung (32) jeweilig verschließen, zu einer zweiten Position zu drehen, in welcher das auf der Welle (23) angeordnete erste Scheibenelement (24) die erste Öffnung (31) und das zweite Scheibenelement (25) die zweite Öffnung (32) jeweilig freigeben.

10. Kraftfahrzeugklimaanlage (1) nach Anspruch 9,
**dadurch gekennzeichnet, dass**
der Drehwinkel der Welle (23) zwischen der ersten Position und der zweiten Position 180° beträgt.

11. Kraftfahrzeugklimaanlage (1) nach einem oder mehreren der Ansprüche 1 bis 10,
**dadurch gekennzeichnet, dass**
das zumindest eine Scheibenelement (24, 25) eine zentrale Öffnung (26) aufweist, durch welche die Welle (23) hindurchgeführt ist.

12. Kraftfahrzeugklimaanlage (1) nach einem oder mehreren der Ansprüche 1 bis 11,
**dadurch gekennzeichnet, dass**
das zumindest eine Scheibenelement (24, 25) auf der Welle (23) fixiert ist.

13. Kraftfahrzeugklimaanlage (1) nach einem oder mehreren der Ansprüche 3 bis 12,
**dadurch gekennzeichnet, dass**
der erste Luftkanal (29) einen ersten Abschnitt (33), der zu einem linken Frontfußaustritt zum Ausgeben der Luft in den vorderen linken Fußraumbereich des Fahrzeuginnenraums des Kraftfahrzeugs führt, und einen zweiten Abschnitt (34) aufweist, der zu einem linken Fondfußaustritt zum Ausgeben der Luft in den hinteren linken Fußraumbereich des Fahrzeuginnenraums des Kraftfahrzeugs führt.

14. Kraftfahrzeugklimaanlage (1) nach einem oder mehreren der Ansprüche 3 bis 13,
**dadurch gekennzeichnet, dass**
der zweite Luftkanal (30) einen ersten Abschnitt (10), der zu einem rechten Frontfußaustritt zum Ausgeben der Luft in den vorderen rechten Fußraumbereich des Fahrzeuginnenraums des Kraftfahrzeugs führt, und einen zweiten Abschnitt (9) aufweist, der zu einem rechten Fondfußaustritt zum Ausgeben der Luft in den hinteren rechten Fußraumbereich des Fahrzeuginnenraums des Kraftfahrzeugs führt.

15. Kraftfahrzeugklimaanlage (1) nach einem der Ansprüche 1 bis 14,
**dadurch gekennzeichnet, dass**
die Kraftfahrzeugklimaanlage (1) einen in dem Gehäuse (2) angeordneten Verdampfer (4) zum Kühlen des Luftstroms und/oder zumindest eine Heizeinrichtung (5) zum Erwärmen des Luftstroms und/oder einen elektrischen Zuheizer (6) und/oder ein Gebläse (3) umfasst.

## Claims

1. A vehicle air conditioning system (1) comprising:
- a housing (2),
- at least one air duct (29, 30), and
- an air distribution unit (7) disposed in the at least one air duct (29, 30), wherein the air distribution unit (7) includes at least one shaft (23) and at least one disk element (24, 25) disposed on the shaft,
**characterized in that**
the at least one disk element (24, 25) is disposed on the shaft (23) at an angle, which is not 90°, with the longitudinal axis (L) of the shaft, and therefore the flow cross-section of the at least one air duct (29) can be changed by rotating the shaft (23) or the at least one disk element (24, 25).

2. The vehicle air conditioning system (1) according to claim 1,
**characterized in that**
the at least one air duct (29, 30) can be closed by the at least one disk element (24, 25) by at least 50%, and completely in particular.

3. The vehicle air conditioning system (1) according to claim 1 or 2,
**characterized in that**
the vehicle air conditioning system (1) furthermore comprises at least one air duct system (27) which includes a main air supply duct (28) and, connected to the main air supply duct (28), a first air duct (29) for supplying air to a left front region and a left rear region of the vehicle interior, and, likewise connected to the main air supply duct (28), a second air duct (30) for supplying air to a right front region and a right rear region of the vehicle interior.

4. The vehicle air conditioning system (1) according to one or more of the claims 1 through 3,
**characterized in that**
the air distributor unit (7) includes a pair of disk elements composed of a first disk element (24) and a second disk element (25), wherein the pair of disk elements acts as an air-distribution flap for distributing a main air flow (L_{G}), which is supplied by the main air supply duct (28), to the first and the second air duct (29, 30).

5. The vehicle air conditioning system (1) according to claim 4,
**characterized in that**
the first disk element (24) and the second disk element (25) are disposed on the shaft (23) with clearance between them, wherein the first disk element (24) is provided at a first opening (31) in the main air supply duct (28) to the first air duct (29), and wherein the second disk element (25) is provided at a second opening (32) of the main air supply duct (28) to the second air duct (30).

6. The vehicle air conditioning system (1) according to claim 4 or 5,
**characterized in that**
the first disk element (24) and the second disk element (25) are disposed on the shaft (23) with mirror symmetry to each other relative to a mirror plane (S) which extends perpendicularly to the longitudinal axis (L) of the shaft (23).

7. The vehicle air conditioning system (1) according to one or more of the claims 1 through 6,
**characterized in that**
the at least one disk element (24, 25) forms an angle with the longitudinal axis (L) of the shaft that lies in a range of 25° to 65°, in particular 45°.

8. The vehicle air conditioning system (1) according to one or more of the claims 1 through 7,
**characterized in that**
the shaft (23) is rotatably supported and is connected to an electric-motor drive, in particular to an actuating drive.

9. The vehicle air conditioning system (1) according to one or more of the claims 4 through 8,
**characterized in that**
the actuating drive is controllable, to rotate the shaft (23) from a first position, in which the first disk element (24) disposed on the shaft (23) closes the first opening (31) and the second disk element (25) closes the second opening (32), into a second position in which the first disk element (24) disposed on the shaft (23) opens the first opening (31) and the second disk element (25) opens the second opening (32).

10. The vehicle air conditioning system (1) according to claim 9,
**characterized in that**
the angle of rotation of the shaft (23) between the first position and the second position is 180°.

11. The vehicle air conditioning system (1) according to one or more of the claims 1 through 10,
**characterized in that**
the at least one disk element (24, 25) includes a central opening (26) through which the shaft (23) extends.

12. The vehicle air conditioning system (1) according to one or more of the claims 1 through 11,
**characterized in that**
the at least one disk element (24, 25) is secured to the shaft (23).

13. The vehicle air conditioning system (1) according to one or more of the claims 3 through 12,
**characterized in that**
the first air duct (29) includes a first section (33), which leads to a left front foot outlet for delivering air to the front left footwell of the vehicle interior, and a second section (34) that leads to a left rear foot outlet for delivering air to the rear left footwell of the vehicle interior.

14. The vehicle air conditioning system (1) according to one or more of the claims 3 through 13,
**characterized in that**
the second air duct (30) includes a first section (10), which leads to a right front foot outlet for delivering air to the front right footwell of the vehicle interior, and a second section (9) that leads to a right rear foot outlet for delivering air to the rear right footwell of the vehicle interior.

15. The vehicle air conditioning system (1) according to one of the claims 1 through 14,
**characterized in that**
the vehicle air conditioning system (1) includes an evaporator (4), which is disposed in the housing (2), for cooling the air flow, and/or at least one heating device (5) for warming the air flow, and/or an electrical auxiliary heater (6), and/or a blower (3).

## Revendications

1. Système de climatisation (1) d'un véhicule automobile, comprenant :
- un carter (2),
- au moins un conduit d'air (29, 30) et
- un ensemble répartiteur d'air (7) disposé dans le conduit d'air (29, 30) au moins au nombre de un, où l'ensemble répartiteur d'air (7) comprend au moins un arbre (23) et au moins un élément à disque (24, 25) disposé sur l'arbre,
**caractérisé en ce que** l'élément à disque (24, 25) au moins au nombre de un est disposé sur l'arbre (23) en formant un angle, qui est différent de 90°, par rapport à l'axe longitudinal (L) de l'arbre, de sorte que la section d'écoulement du conduit d'air (29) au moins au nombre de un peut être modifiée par un mouvement de rotation de l'arbre (23) ou de l'élément à disque (24, 25) au moins au nombre de un.

2. Système de climatisation (1) d'un véhicule automobile selon la revendication 1, **caractérisé en ce que** le conduit d'air (29, 30) au moins au nombre de un peut être fermé, en particulier de façon totale, au moins de 50 %, par l'élément à disque (24, 25) au moins au nombre de un.

3. Système de climatisation (1) d'un véhicule automobile selon la revendication 1 ou 2, **caractérisé en ce que** le système de climatisation (1) d'un véhicule automobile présente en outre au moins un système (27) de conduits d'air qui comporte un conduit principal d'alimentation d'air (28), un premier conduit d'air (29) communiquant avec le conduit principal d'alimentation d'air (28) et servant à l'alimentation d'air respectivement dans un secteur avant et arrière gauche de l'habitacle du véhicule automobile, et un deuxième conduit d'air (30) communiquant avec le conduit principal d'alimentation d'air (28) et servant à l'alimentation d'air respectivement dans un secteur avant et arrière droit de l'habitacle du véhicule automobile.

4. Système de climatisation (1) d'un véhicule automobile selon l'une ou plusieurs des revendications 1 à 3, **caractérisé en ce que** l'ensemble répartiteur d'air (7) présente une paire d'éléments à disque se composant d'un premier élément à disque (24) et d'un second élément à disque (25), où la paire d'éléments à disque agit comme un volet répartiteur d'air pour la répartition, dans le premier et le deuxième conduit d'air (29, 30), d'un flux d'air principal (L_{G}) fourni à partir du conduit principal d'alimentation d'air (28).

5. Système de climatisation (1) d'un véhicule automobile selon la revendication 4, **caractérisé en ce que** le premier élément à disque (24) et le second élément à disque (25) sont disposés sur l'arbre (23), en étant espacés l'un de l'autre, où le premier élément à disque (24) est prévu au niveau d'une première ouverture (31) du conduit principal d'alimentation d'air (28) menant au premier conduit d'air (29), et où le second élément à disque (25) est prévu au niveau d'une deuxième ouverture (32) du conduit principal d'alimentation d'air (28) menant au deuxième conduit d'air (30).

6. Système de climatisation (1) d'un véhicule automobile selon la revendication 4 ou 5, **caractérisé en ce que** le premier élément à disque (24) et le second élément à disque (25) sont disposés sur l'arbre (23), en étant à symétrie spéculaire l'un par rapport à l'autre relativement à un plan de miroir (S) qui est perpendiculaire à l'axe longitudinal (L) de l'arbre (23).

7. Système de climatisation (1) d'un véhicule automobile selon l'une ou plusieurs des revendications 1 à 6, **caractérisé en ce que** l'élément à disque (24, 25) au moins au nombre de un forme, avec l'axe longitudinal (L) de l'arbre, un angle qui se situe dans une plage allant de 25° à 65°, en particulier de 45° environ.

8. Système de climatisation (1) d'un véhicule automobile selon l'une ou plusieurs des revendications 1 à 7, **caractérisé en ce que** l'arbre (23) est monté en rotation et est raccordé à un entraînement par moteur électrique, en particulier à un servomoteur.

9. Système de climatisation (1) d'un véhicule automobile selon l'une ou plusieurs des revendications 4 à 8, **caractérisé en ce que** le servomoteur est réglable pour faire tourner l'arbre (23), passant d'une première position dans laquelle le premier élément à disque (24) et le second élément à disque (25), disposés sur l'arbre (23), ferment respectivement la première ouverture (31) et la deuxième ouverture (32), à une deuxième position dans laquelle le premier élément à disque (24) et le second élément à disque (25), disposés sur l'arbre (23), ouvrent respectivement la première ouverture (31) et la deuxième ouverture (32).

10. Système de climatisation (1) d'un véhicule automobile selon la revendication 9, **caractérisé en ce que** l'angle de rotation de l'arbre (23) formé entre la première position et la deuxième position est égal à 180°.

11. Système de climatisation (1) d'un véhicule automobile selon l'une ou plusieurs des revendications 1 à 10, **caractérisé en ce que** l'élément à disque (24, 25) au moins au nombre de un présente une ouverture centrale (26) à travers laquelle est guidé l'arbre (23).

12. Système de climatisation (1) d'un véhicule automobile selon l'une ou plusieurs des revendications 1 à 11, **caractérisé en ce que** l'élément à disque (24, 25) au moins au nombre de un est fixé sur l'arbre (23).

13. Système de climatisation (1) d'un véhicule automobile selon l'une ou plusieurs des revendications 3 à 12, **caractérisé en ce que** le premier conduit d'air (29) présente une première partie (33) qui conduit à une sortie de l'espace pour les pieds, située côté gauche à l'avant, pour fournir de l'air dans le secteur avant gauche de l'espace pour les pieds dans l'habitacle du véhicule automobile, et une deuxième partie (34) qui conduit à une sortie de l'espace pour les pieds, située côté gauche à l'arrière, pour fournir de l'air dans le secteur arrière gauche de l'espace pour les pieds dans l'habitacle du véhicule automobile.

14. Système de climatisation (1) d'un véhicule automobile selon l'une ou plusieurs des revendications 3 à 13, **caractérisé en ce que** le deuxième conduit d'air (30) présente une première partie (10) qui conduit à une sortie de l'espace pour les pieds, située côté droit à l'avant, pour fournir de l'air dans le secteur avant droit de l'espace pour les pieds dans l'habitacle du véhicule automobile, et une deuxième partie (9) qui conduit à une sortie de l'espace pour les pieds, située côté droit à l'arrière, pour fournir de l'air dans le secteur arrière droit de l'espace pour les pieds dans l'habitacle du véhicule automobile.

15. Système de climatisation (1) d'un véhicule automobile selon l'une quelconque des revendications 1 à 14, **caractérisé en ce que** le système de climatisation (1) d'un véhicule automobile comprend un évaporateur (4) disposé dans le carter (2) et servant au refroidissement du flux d'air, et / ou au moins un dispositif de chauffage (5) servant à chauffer le flux d'air, et / ou un dispositif de chauffage électrique auxiliaire (6) et / ou une soufflante (3).
